# DEMANDE DE BREVET EUROPEEN

(11) **EP 2 711 610 A1**
(43) Date de publication de la demande: **26.03.2014**
(21) Numéro de dépôt: 13184048.0
(22) Date de dépôt: 12.09.2013
(51) Int. Cl.: F21S 8/10, F21V 8/00, G02B 6/00

(54) **Dispositif d'éclairage et/ou de signalisation, notamment pour véhicule automobile**

(30) Priorité: 25.09.2012 FR 1258990
(71) Demandeur: VALEO VISION, 93012 Bobigny Cedex (FR)
(72) Inventeur: Sagna, Boubacar, 78500 SARTROUVILLE (FR); De Lamberterie, Antoine, 75019 PARIS (FR); Jin, Hui, 75014 PARIS (FR); Dubosc, Christophe, 93250 VILLEMOMBLE (FR)

(57) **Abrégé**

La présente invention concerne un dispositif d'éclairage et/ou de signalisation (1), notamment pour véhicule automobile, comprenant une source lumineuse (S) configurée pour émettre des rayons lumineux, un guide d'orientation (3) de la lumière muni d'un axe optique, ledit guide d'orientation (3) étant apte à diriger lesdits rayons lumineux émis par ladite source lumineuse (S) de façon sensiblement parallèle au dit axe optique en sortie dudit guide d'orientation (3), ledit dispositif comprenant en outre un guide de répartition (5) de la lumière apte à transmettre tout ou partie des rayons lumineux issus dudit guide d'orientation (3) et à diffuser lesdits rayons en dehors dudit guide de répartition (5).

Selon l'invention, le guide d'orientation (3) comprend :
- une face d'entrée (2) des rayons lumineux,
- une face de sortie (8), et
- un bord arrière (4) de forme courbe de forme parabolique pour réfléchir lesdits rayons lumineux issus de la face d'entrée (2) vers la face de sortie (8),
la face de sortie (8) étant orthogonale au dit axe optique.

## Description

La présente invention concerne un dispositif d'éclairage et/ou de signalisation, notamment pour véhicule automobile. Elle est en particulier destinée aux feux de position, clignotant ou feux stop.

Dans le domaine automobile, on sait que les constructeurs souhaitent se singulariser, notamment avec des éléments visuellement originaux, afin d'être identifiables plus facilement par rapport aux concurrents.

Cependant, ils sont soumis à des contraintes réglementaires sévères, qui laissent peu de marges de manoeuvre. Ainsi, ils doivent respecter des couleurs, des dimensions minimales et des seuils de luminosité imposés.

Ces dispositifs doivent aussi garder un encombrement réduit et une consommation électrique limitée. Pour cela, il est connu d'utiliser des dispositifs de signalisation munis d'une source lumineuse, en général une pluralité de diodes électroluminescentes, et un guide de lumière à travers lequel se propage un faisceau lumineux issu de la source. La lumière est dirigée dans le guide par réflexion totale jusqu'à une face de sortie. Pour se distinguer, il est possible de jouer sur les formes et les aspects lumineux des guides.

La lumière est émise à l'aide de prismes de réflexion formés sur la face du guide opposé à sa face de sortie. Bien que permettant d'atteindre une intensité lumineuse significative, de tels guides présentent l'inconvénient d'émettre de la lumière de façon très dirigée. Autrement dit, dès que l'observateur s'écarte angulairement de l'axe optique d'émission, la luminosité décroît rapidement.

Dans la demande de brevet EP 1 434 000, il a déjà été proposé des dispositifs, dont le guide comporte des foyers optiques disposés sur une face, afin de faire diffuser la lumière et constituer un écran de découplage ou de répartition de lumière. Les foyers optiques diffusent autour d'eux, une quantité sensiblement égale de lumière dans toutes les directions, et donnent ainsi, un aspect lumineux à toute la surface du feu. Le résultat obtenu est un effet visuel apportant un caractère esthétique particulier et un cône d'émission agrandi.

Cependant, ces écrans de découplage ou de répartition de lumière munis de foyers optiques n'ont pas un rendement optique optimal en terme de luminosité. Les foyers renvoient vers l'extérieur du guide une lumière trop faible, ne répondant pas aux critères exigés.

Pour augmenter la luminosité et répondre aux normes, ces dispositifs possèdent en conséquence, un grand nombre de sources lumineuses. Donc, non seulement la consommation électrique est plus importante, mais le dispositif est plus compliqué à assembler, et surtout, son coût de fabrication est plus élevé.

L'invention vise donc à améliorer le rendement optique d'un guide de découplage de lumière, en proposant un dispositif d'éclairage et/ou de signalisation, notamment pour véhicule automobile, comprenant une source lumineuse configurée pour émettre des rayons lumineux, un guide d'orientation de la lumière muni d'un axe optique, ledit guide d'orientation étant apte à diriger lesdits rayons lumineux émis par ladite source lumineuse de façon sensiblement parallèle au dit axe optique en sortie dudit guide d'orientation, ledit dispositif comprenant en outre un guide de répartition de la lumière apte à transmettre tout ou partie des rayons lumineux issus dudit guide d'orientation et à diffuser lesdits rayons en dehors dudit guide de répartition.

Selon l'invention, le guide d'orientation comprend :
- une face d'entrée des rayons lumineux,
- une face de sortie, et
- un bord arrière de forme courbe de forme parabolique pour réfléchir lesdits rayons lumineux issus de la face d'entrée vers la face de sortie,
la face de sortie étant orthogonale au dit axe optique.

Ainsi, à source lumineuse d'intensité donnée, le dispositif augmente la luminosité émise par le guide de répartition, par rapport à celle qui serait émise si la lumière était transmise directement dans le guide de répartition par la source lumineuse. En effet, le guide d'orientation dirige les rayons lumineux dans des plans parallèles à l'axe optique du guide. De cette façon, le faisceau lumineux est concentré dans une direction et permet d'obtenir une intensité supérieure de la lumière diffusée par le guide de répartition.

Ladite source lumineuse est en particulier une diode électroluminescente unique. En effet, grâce au guide d'orientation, prévoir une seule diode est suffisant pour atteindre les intensités lumineuses désirées en sortie de dispositif.

Le dispositif permet également d'augmenter l'homogénéité du guide de répartition, puisque le guide d'orientation permet de passer d'une source ponctuelle, à une source étendue, permettant de ce fait d'éclairer une surface plus large.

Selon différents modes de réalisation de l'invention, qui pourront être pris ensemble ou séparément :
- les guides d'orientation et de répartition sont dans le prolongement optique l'un de l'autre ;
- les guides d'orientation et de répartition sont en continuité de matière l'un de l'autre ;
- le guide de répartition comprend une face de répartition comportant une pluralité de motifs ;
- les motifs sont des altérations superficielles de la face de répartition ;
- les motifs sont des éléments de surfaces réfléchissantes formés sur la face de répartition, obtenus par moulage ou par usinage ;
- le guide de répartition comprend :
   - une face d'entrée des rayons provenant du guide d'orientation ; et/ou
   - une face de sortie des rayons diffusés par ladite face de diffusion ;
- la face de sortie du guide d'orientation correspond à la face d'entrée du guide de répartition ;
- ladite source lumineuse est une diode électroluminescente ;
- les guides d'orientation et de répartition sont des guides surfaciques, formant une nappe ;
- ledit dispositif est configuré pour que le guide d'orientation émette une première partie du faisceau dans le guide de répartition, et une deuxième partie du faisceau en dehors du guide de répartition.

L'invention sera mieux comprise à la lumière de la description suivante qui n'est donnée qu'à titre indicatif et qui n'a pas pour but de la limiter, accompagnée des dessins joints :
- la Figure 1, illustrant de façon schématique, une vue de côté d'un dispositif d'éclairage et/ou de signalisation selon l'invention,
- la Figure 2 illustrant de façon schématique, une vue de dessus d'un dispositif d'éclairage et/ou de signalisation selon l'invention,
- la Figure 3 illustrant de façon schématique, une vue en perspective, du guide d'orientation selon l'invention.

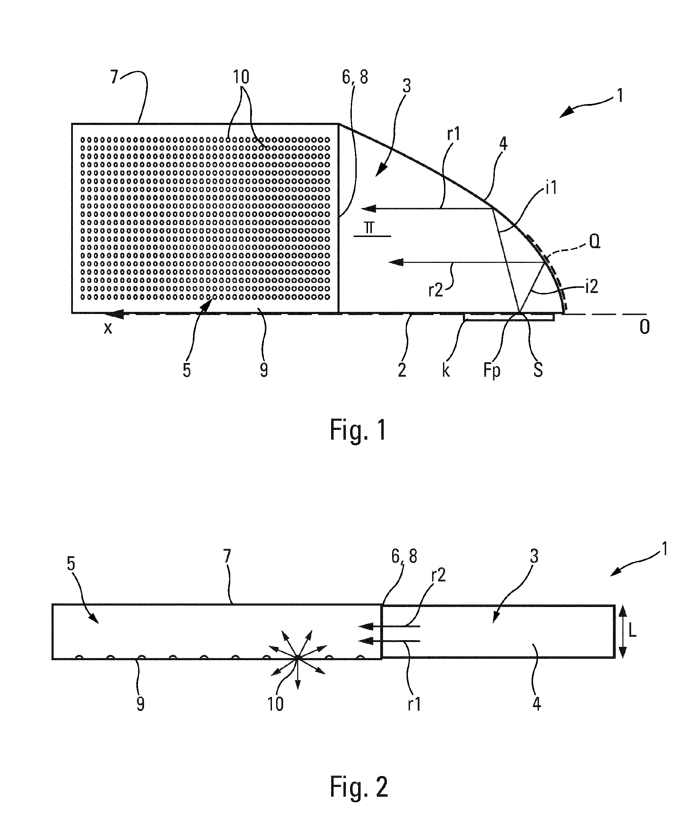

Comme illustré à la Figure 1, l'invention concerne un dispositif d'éclairage et/ou de signalisation 1 comprenant une source lumineuse S configurée pour émettre des rayons lumineux. Ici, ladite source lumineuse S comprend une diode électroluminescente disposée sur un support k de type PCB, en particulier un support de type substrat métallique isolé.

La diode est agencée sur une face d'entrée 2 d'un guide d'orientation 3 de la lumière, de sorte que lesdits rayons lumineux émis pénètrent à l'intérieur dudit guide par cette face d'entrée 2. Le guide d'orientation 3 est configuré pour diriger les rayons vers une face de sortie 8, en les orientant de façon sensiblement parallèle à un plan π horizontal.

Le guide d'orientation 3 est, par exemple, un guide surfacique plat, formant une nappe comprise entre deux grandes faces parallèles délimitées par un contour à trois côtés, respectivement un côté correspondant à la face d'entrée 2, un côté correspondant à la face de sortie 8 et un bord arrière 4 courbe convexe. La face de sortie 8 s'étend transversalement à la face d'entrée 2 qui a pour largeur l'épaisseur entre les deux grandes faces parallèles du guide 3. Le bord arrière 4 s'étend entre les extrémités non confondues de la face d'entrée 2 et de la face de sortie 8.

La nappe a une épaisseur constante L correspondant à la largeur des faces d'entrée 2 et de sortie 8, comme représenté sur la Figure 2.

Comme le montre la Figure 1, la face d'entrée 2 est plane et horizontale, la nappe constituant le guide d'orientation 3 est verticale et la face de sortie 8 est plane et orthogonale à la face d'entrée 2, c'est-à-dire qu'elle est verticale.

Dans l'exemple considéré, la forme courbe du bord arrière 4 est associée au profil de la face de sortie 8 pour que les rayons lumineux sortants du guide d'orientation 3 aient une direction sensiblement parallèle à un plan horizontal π.

Le bord arrière 4 est formé par une portion de cylindre parabolique, dont l'axe de symétrie Ox est parallèle au plan horizontal π, et est, dans cet exemple, parallèle à la grande dimension de la face d'entrée 2. Le foyer Fp de la parabole résultant de la section du bord arrière 4 par un plan vertical médian entre les faces du guide d'orientation 3 est situé dans la partie arrière de la face d'entrée 2. Le centre, ou un autre point, de la source S est placé au foyer Fp de la parabole.

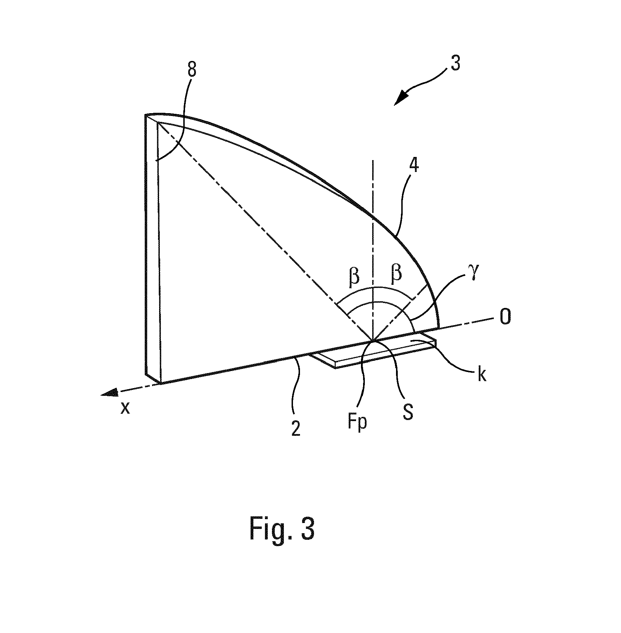

Tel que montré sur la Figure 3, la diode S émet un faisceau lumineux selon un diagramme d'émission Lambertien, c'est-à-dire un faisceau présentant une demi-ouverture β d'environ 40°, en référence à l'axe de symétrie de la diode S, la demi-ouverture étant définie pour une intensité minimale d'au moins 50% de l'intensité maximale émise par la diode S.

La géométrie du bord arrière 4 est choisie de telle sorte que l'angle γ sous lequel ce bord arrière 4 est vu depuis la source lumineuse S s'étend de part et d'autre de la normale à la source lumineuse S de manière à recouvrir l'ouverture 2 β de la source S, afin de récupérer un maximum de flux lumineux issu de la source S.

La totalité des rayons émis par la source lumineuse entrant dans le guide d'orientation 3 est réfléchie dans une direction sensiblement parallèle au plan π, ainsi que cela est représenté sur la Figure1.

Un rayon i1 émis par la source S et incliné vers l'avant par rapport à la normale à la source, présente en général un angle d'incidence sur le bord arrière supérieur à l'angle limite de réflexion totale, de sorte que ce rayon est réfléchi, et ceci selon un rayon r1 parallèle au plan π.

Un rayon i2 émis par la source S vers l'arrière présente généralement un angle d'incidence inférieur à l'angle limite de réflexion totale. Pour favoriser la réflexion, la zone inférieure Q de la tranche arrière pourra être revêtue d'une couche réfléchissante, en particulier cette zone est aluminée. Le rayon i2 est alors réfléchi suivant un rayon r2 parallèle au plan π.

On assure ainsi une collimation (c'est-à-dire la génération d'un faisceau de rayons parallèles) suivant la direction de l'axe optique, dans le plan vertical.

Ledit dispositif 1 comprend en outre, un guide de répartition 5 de la lumière apte à transmettre lesdits rayons lumineux issus du guide d'orientation 3 et à répartir tout ou partie desdits rayons en dehors du guide de répartition 5. Ledit guide de répartition 5 comprend une face d'entrée 6 des rayons provenant du guide d'orientation et une face de sortie 7 des rayons réémis par une face de répartition 9. A cet effet, les guides d'orientation 3 et de répartition 5 sont dans le prolongement optique l'un de l'autre, afin de faciliter le passage des rayons lumineux. Ainsi les rayons r1, r2 passent du guide d'orientation au guide de répartition 5, comme le montre la Figure 2.

On comprend que, grâce au guide d'orientation 3, on dispose d'un faisceau lumineux réparti sur la face d'entrée 6 du guide de répartition 5, et ceci à partir d'une seule diode électroluminescente. L'avantage de l'invention ressort ainsi clairement, comparée à la pluralité de diodes nécessaires pour le même résultat dans les dispositifs de l'état de l'art. L'effet de collimation obtenu avec le guide d'orientation 3 renforce encore l'efficacité optique du dispositif 1 conforme à l'invention.

La face de sortie 8 du guide d'orientation correspond avantageusement à la face d'entrée 6 du guide de répartition 5. Autrement dit la face de sortie 8 du guide d'orientation 3 et la face d'entrée 6 du guide de répartition 5 ont des dimensions identiques. Cette caractéristique assure un transfert complet des rayons dirigés du guide d'orientation 3 vers le guide de répartition 5, sans avoir de pertes.

Comme les guides d'orientation 3 et de répartition 5 sont des guides surfaciques, ils forment ensemble une nappe, de forme longitudinale rectiligne ou courbée, selon les besoins d'utilisation du dispositif 1. De tels dispositifs 1 sont particulièrement intéressants car ils peuvent être agencés de multiples manières, dans un minimum de place. Il est ainsi possible de donner aux guides des formes originales.

De préférence, ladite face de répartition 9 comporte une pluralité de motifs 10. Les motifs 10 sont par exemple des foyers de diffusion, obtenus par altérations de la face de répartition 9, par exemple des impacts laser. Les motifs 10 peuvent également être constitués d'éléments de surfaces réfléchissantes, par exemple des faces de micro-prismes formés sur la face de répartition 9, obtenues par moulage ou par usinage.

Ces motifs 10 vont avoir pour fonction première de dévier les rayons lumineux qui sont susceptibles de se propager dans l'épaisseur du guide de répartition 5 par une succession de réflexions totales. Quand une partie au moins de ces rayons lumineux frappent les motifs 10, les rayons en question sont réémis, par diffusion ou par réflexion, au moins en partie, selon de multiples directions. Pour l'observateur, tout va alors se passer comme si ces motifs 10 étaient eux même des sources lumineuses. Ces motifs 10 sont formés en creux ou en relief sur la surface polie optique de la face de répartition 9. Chaque motif 10 se comporte alors comme une source optique secondaire. On peut ensuite avoir toutes sortes de répartition de ces motifs en fonction de l'effet recherché.

Les dimensions de ces motifs sont telles qu'ils ont une surface apparente de 0,1 à 1 ou 2 mm², ils ont des profondeurs variables de quelques dixièmes de millimètres à un ou deux millimètres, leur forme peut être évolutive, notamment de ronde à rectangulaire, leur état de surface est diffusant ou réfléchissant. Leur répartition peut être homogène, régulière ou évolutive selon une direction donnée.

Selon un autre mode de réalisation, non représenté, le positionnement relatif du guide d'orientation 3 par rapport au guide de répartition 5 est configuré pour que le guide d'orientation 3 émette une première partie du faisceau en dehors du dispositif 1, et une deuxième partie du faisceau dans le guide de répartition 5.

Ainsi le dispositif fournit un éclairage associant deux types de luminosité, un premier type direct dont le faisceau unique n'est pas passé par le guide de répartition 5, et un deuxième type indirect après passage par le guide de répartition 5. Cette combinaison offre à la fois les avantages esthétiques d'un éclairage diffus, allié à l'efficacité de l'intensité lumineuse fournie par un éclairage direct.

Plus précisément, c'est le positionnement relatif du guide d'orientation par rapport au guide de répartition qui permet de séparer le faisceau en deux parties. Ainsi, il est plus facile de dévier la première partie du faisceau dans le guide de répartition, et la deuxième partie du faisceau en dehors du dispositif, par exemple grâce à un angle formé entre les deux guides.

Le guide d'orientation pourra en outre comporter une partie intermédiaire raccordant le guide d'orientation au guide de répartition. La partie intermédiaire est, par exemple, un cylindre à génératrices rectilignes orthogonales à la face d'entrée du guide d'orientation, et donc verticales dans l'exemple considéré. Son profil de section a un premier côté convexe et un deuxième côté en forme de prisme s'élargissant, puis d'arc en ellipse. Le premier côté dirige la première partie du faisceau vers la face d'entrée du guide de répartition, alors que le deuxième côté laisse la deuxième partie du faisceau sortir en dehors du dispositif par la face dont le profil est l'arc d'ellipse. Dans ce cas, le profil de la face de sortie du guide d'orientation est défini par l'arc d'ellipse et l'interface entre les guides d'orientation et de répartition, qui est la face d'entrée du guide de répartition.

## Revendications

1. Dispositif d'éclairage et/ou de signalisation (1), notamment pour véhicule automobile, comprenant une source lumineuse (S) configurée pour émettre des rayons lumineux, un guide d'orientation (3) de la lumière muni d'un axe optique, ledit guide d'orientation (3) étant apte à diriger lesdits rayons lumineux émis par ladite source lumineuse (S) de façon sensiblement parallèle au dit axe optique en sortie dudit guide d'orientation (3), ledit dispositif comprenant en outre un guide de répartition (5) de la lumière apte à transmettre tout ou partie des rayons lumineux issus dudit guide d'orientation (3) et à diffuser lesdits rayons en dehors dudit guide de répartition (5),
**caractérisé en ce que** le guide d'orientation (3) comprend :
- une face d'entrée (2) des rayons lumineux,
- une face de sortie (8), et
- un bord arrière (4) de forme courbe de forme parabolique pour réfléchir lesdits rayons lumineux issus de la face d'entrée (2) vers la face de sortie (8),
la face de sortie (8) étant orthogonale au dit axe optique.

2. Dispositif d'éclairage et/ou de signalisation selon la revendication 1, dans lequel les guides d'orientation (3) et de répartition (5) sont dans le prolongement optique l'un de l'autre.

3. Dispositif d'éclairage et/ou de signalisation selon l'une quelconque des revendications 1 ou 2, dans lequel les guides d'orientation (3) et de répartition (5) sont en continuité de matière l'un de l'autre.

4. Dispositif d'éclairage et/ou de signalisation selon l'une quelconque des revendication 1 à 3, dans lequel le guide de répartition (5) comprend une face de répartition (9) comportant une pluralité de motifs (10).

5. Dispositif d'éclairage et/ou de signalisation selon la revendication 4, dans lequel les motifs (10) sont des altérations superficielles de la face de répartition (9).

6. Dispositif d'éclairage et/ou de signalisation selon la revendication 4, dans lequel les motifs (10) sont des éléments de surfaces réfléchissantes formés sur la face de répartition (9), obtenus par moulage ou par usinage.

7. Dispositif d'éclairage et/ou de signalisation selon la revendication 1, dans lequel le guide de répartition (5) comprend :
- une face d'entrée (6) des rayons provenant du guide d'orientation ; et/ou
- une face de sortie (7) des rayons diffusés par ladite face de diffusion (9).

8. Dispositif d'éclairage et/ou de signalisation selon la revendication 7, dans lequel la face de sortie (8) du guide d'orientation (3) correspond à la face d'entrée (6) du guide de répartition (5).

9. Dispositif d'éclairage et/ou de signalisation selon l'une quelconque des revendications précédentes, dans lequel ladite source lumineuse (S) est une diode électroluminescente.

10. Dispositif d'éclairage et/ou de signalisation selon l'une quelconque, des revendications précédentes, dans lequel les guides d'orientation (3) et de répartition (5) sont des guides surfaciques, formant une nappe.

11. Dispositif d'éclairage et/ou de signalisation selon l'une quelconque, des revendications précédentes, dans lequel ledit dispositif est configuré pour que le guide d'orientation (3) émette une première partie du faisceau dans le guide de répartition (5), et une deuxième partie du faisceau en dehors du guide de répartition (5).
